# EUROPÄISCHE PATENTSCHRIFT

(11) **EP 1 682 365 B1**
(45) Veröffentlichungstag und Bekanntmachung des Hinweises auf die Patenterteilung: **26.05.2010**
(21) Anmeldenummer: 04790979.1
(22) Anmeldetag: 28.10.2004
(51) Int. Cl.: B60G 9/02, B60L 11/00

(54) **FAHRZEUGACHSSYSTEM, SCHUBROHR, FAHRZEUGACHSE UND FAHRZEUG**
VEHICLE AXLE SYSTEM, TORQUE TUBE, VEHICLE AXLE, AND VEHICLE
SYSTEME D'ESSIEU DE VEHICULE, TUBE COULISSANT, ESSIEU DE VEHICULE ET VEHICULE

(30) Priorität: 31.10.2003 DE 10351308
(43) Veröffentlichungstag der Anmeldung: 26.07.2006
(73) Patentinhaber: DEERE & COMPANY, Moline, IL 61265-8098 (US)
(72) Erfinder: TARASINSKI, Nicolai, 67227 Frankenthal (DE); SOBOTZIK, Joachim, 67245 Lambsheim (DE); REINARDS, Marco, 54608 Bleialf (DE); KNEER, Bernd, 68519 Viernheim (DE)
(74) Vertreter: Magin, Ludwig Bernhard
(86) Internationale Anmeldenummer: PCT/EP2004/012209
(87) Internationale Veröffentlichungsnummer: WO 2005/042283

(56) Entgegenhaltungen:
- EP-A- 1 108 569
- DE-A- 2 605 722
- DE-A- 4 108 647
- DE-U- 20 206 821
- US-A- 5 947 855
- US-A- 6 086 076
- US-B1- 6 502 840

## Beschreibung

Die Erfindung betrifft ein Fahrzeugachssystem für ein landwirtschaftliches oder industrielles Nutzfahrzeug. Das Fahrzeugachssystem weist eine beweglich - vorzugsweise pendelnd - gelagerte Fahrzeugachse auf, wobei mindestens zwei Räder an der Fahrzeugachse drehbar anbringbar sind. Es ist ein Schubrohr vorgesehen, welches zur Unterstützung der Achsaufhängung einenends mit einem Rahmen eines Fahrzeugs und anderenends mit der Fahrzeugachse verbindbar ist. Es ist mindestens ein an der Fahrzeugachse angeordneter elektrischer Antrieb vorgesehen, mit welchem mindestens ein an der Fahrzeugachse angebrachtes Rad antreibbar ist. Weiterhin betrifft die vorliegende Erfindung ein Schubrohr, welches zur Unterstützung einer Achsaufhängung einenends mit einem Rahmen eines Fahrzeugs und anderenends mit einer Fahrzeugachse verbindbar ist. Darüber hinaus betrifft die vorliegende Erfindung eine Fahrzeugachse, die beweglich an ein Fahrzeug anbaubar und vorzugsweise pendelnd gelagert ist, und an die mindestens zwei Räder drehbar anbringbar sind. Die vorliegende Erfindung betrifft auch ein Fahrzeug, insbesondere ein landwirtschaftliches oder industrielles Nutzfahrzeug.

Fahrzeugachssysteme der eingangs genannten Art sind seit langem aus dem Stand der Technik bekannt. So ist beispielsweise aus der EP 0 913 280 A1 ein Fahrzeugachssystem bekannt, bei welchem die Vorderachse zur Unterstützung der Achsaufhängung an einem Schubrohr angebracht ist. Das eine Ende des Schubrohrs steht hierbei über ein Kugelgelenk mit dem Rahmen des Fahrzeugs in Verbindung. Das andere Ende des Schubrohrs ist starr an der Vorderachse befestigt. Die Vorderachse ist pendelnd gelagert. Das Schubrohr dient bei dem aus der EP 0 193 280 A1 bekannten Nutzfahrzeug - welches in Form eines Ackerschleppers ausgebildet ist - zum Abstützen der Vorderachse in Fahrzeuglängsrichtung. Ganz allgemein wird das Schubrohr auch als Zug- oder Schublenker bezeichnet. Das Schubrohr nimmt üblicherweise eine Antriebswelle auf, welche zumindest ein Teil des von einem Verbrennungsmotor erzeugten Drehmoments auf die der Fahrzeugachse zugeordneten Räder - gegebenenfalls über ein Differentialgetriebe - überträgt. Somit dient das Schubrohr einerseits zur Unterstützung der Aufhängung einer Fahrzeugachse und andererseits zum Schutz einer darin verlaufenden Antriebswelle.

Ferner ist aus der DE 196 23 738 A1 ein Nutzfahrzeug bekannt, welches eine Vorderachse mit elektrischen Einzelradantrieben aufweisen kann. Hierbei ist vorgesehen, dass die Räder der Vorderachse über eine Kardanwelle von einem Verbrennungsmotor und/oder von dem elektrischen Antrieb über ein Summengetriebe angetrieben werden, wobei die Antriebsleitung der Kardanwelle und die des elektrischen Antriebs über ein Summengetriebe an das Rad abgebbar ist. Hierdurch ist eine stufenlose Anpassung der Drehzahlen der einzelnen Räder der Vorderachse möglich, wodurch ein vielseitiger Einsatz dieses Fahrzeugs möglich ist.

Aus der DE 202 06 821 U1 ist eine Fahrzeugachse gemäß den Merkmalen des Oberbegriffs des Anspruchs 1 bekannt.

Nun könnten die an der Fahrzeugachse angeordneten elektrischen Antriebe durch flexible elektrische Leitungsverbindungen mit einem am Fahrzeug vorgesehenen Generator verbunden werden. Nachteilig hieran ist, dass solch flexibel verlegte elektrische Leitungen im Einsatz des Nutzfahrzeugs oder im abgestellten Zustand insbesondere von Mardern beschädigt werden können.

Der vorliegenden Erfindung liegt daher die Aufgabe zugrunde, ein Fahrzeugachssystem, eine Fahrzeugachse, ein Schubrohr und ein Fahrzeug der eingangs genannten Art anzugeben und weiterzubilden, durch welches die vorgenannten Probleme überwunden werden. Insbesondere soll eine Versorgung der elektrischen Antriebe mit elektrischem Strom erfolgen, wobei die diesbezüglichen Versorgungsleitungen unter Normalbedingungen nicht beschädigt werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Fahrzeugachssystem der eingangs genannten Art dadurch gekennzeichnet, dass am Schubrohr elektrische Komponenten für den elektrischen Antrieb vorgesehen sind. Elektrische Versorgungsleitungen sind von einem am Fahrzeug angeordneten Stromvrsorgungssystem über das Schubrohr zur Fahrzeugachse geleitet. Die Fahrzeugachse ist pendelnd gelagert. Die Fahrzeugachse weist eine Lenkachse auf und/oder ist als Vorderachse ausgebildet.

Erfindungsgemäß ist zunächst erkannt worden, dass insbesondere elektrische Versorgungsleitungen von einem am Fahrzeug angeordneten Generator- bzw. Stromversorgungssystem über das Schubrohr zur Fahrzeugachse geleitet werden können, und zwar insbesondere im Schubrohr verlaufend, so dass die elektrischen Leitungen vom Fahrzeug an die beweglich gelagerte Fahrzeugachse gegen äußere Einflüsse geschützt sind. Somit müssen die elektrischen Versorgungsleitungen beispielsweise nicht entlang eines Hydraulikzylinders verlegt werden, welcher einen Rahmen des Fahrzeugs mit dem bewegbar angeordneten Fahrzeugachsensystem verbindet, wo die elektrischen Versorgungsleitungen äußeren Einflüssen ungeschützt ausgesetzt wären. Daher ist vorzugsweise vorgesehen, die elektrischen Komponenten für den elektrischen Antrieb im Schubrohr anzuordnen. Insoweit übernimmt das Schubrohr zu den bereits vorliegenden Funktionen - Unterstützung der Achsaufhängung und Schutz einer gegebenenfalls vorgesehenen mechanischen Antriebswelle - eine weitere Funktion, nämlich die Führung und den Schutz elektrischer Verbindungsleitungen bzw. ganz allgemein den Schutz elektrischer Komponenten.

Nun könnte das Schubrohr einen im Wesentlichen kreis-, oval- oder vieleckförmigen Querschnitt aufweisen. Entlang seiner Längsrichtung könnte das Schubrohr konisch verlaufen, wobei der dem Fahrzeugachsensystem zugewandte Teil des Schubrohrs einen größeren Querschnitt aufweisen könnte als der dem Rahmen des Nutzfahrzeugs zugewandte Teil. Gegebenenfalls können am Schubrohr eine längsförmige Ausbuchtung vorgesehen sein, in welcher elektrische Versorgungsleitungen verlaufend angeordnet sind. In diesem Fall sind die entsprechenden elektrischen Komponenten am äußeren Bereich des Schubrohrs - jedoch von der Ausbuchtung geschützt - angeordnet. Vorzugsweise ist das Schubrohr aus mehreren Teilen zusammensetzbar und insbesondere modular ausgebildet. So könnte ein Teil des Schubrohrs einen im Wesentlichen U-förmigen Querschnitt aufweisen, auf welchem der andere Teil des Schubrohrs montierbar ist, welcher im Wesentlichen eine Plattenform aufweisen könnte. Eine solche Ausgestaltung des Schubrohrs ermöglicht eine einfache Montage der darin angeordneten elektrischen Komponenten. Insoweit wäre das Schubrohr auch modular ausgebildet, jedenfalls aus einzelnen Modulen bestehend montierbar.

In einer bevorzugten Ausführungsform könnten die am Schubrohr vorgesehenen elektrischen Komponenten mindestens einen Leistungselektronikbaustein aufweisen. Mit einem solchen Leistungselektronikbaustein könnte beispielsweise die Höhe der elektrischen Leistung steuerbar sein, welche an den elektrischen Antrieb abgebbar ist.

Alternativ oder zusätzlich zur Anordnung eines Leistungselektronikbausteins am Schubrohr könnte vorgesehen sein, mindestens einen Leistungselektronikbaustein an der Fahrzeugachse anzuordnen, wobei dieser Leistungselektronikbaustein eine vergleichbare Funktion erfüllen könnte.

In einer ebenfalls bevorzugten Ausführungsform könnten die am Schubrohr vorgesehenen elektrischen Komponenten einen Umrichter aufweisen. Grundsätzlich könnte vorgesehen sein, dass der elektrische Strom für die elektrischen Antriebe mit Hilfe eines Generators erzeugt wird. Üblicherweise wird ein solcher Generator vom Verbrennungsmotor des Nutzfahrzeugs angetrieben. Da der Verbrennungsmotor jedoch in Abhängigkeit der jeweiligen Fahrsituation des Nutzfahrzeugs eine variable Drehzahl aufweist, weist der von dem Generator erzeugte elektrische Strom eine variable Frequenz auf. Zur Umwandlung des elektrischen Wechselstroms variabler Frequenz in elektrischen Wechselstrom einer vorgegebenen, im Wesentlichen konstanten Frequenz könnte ein solcher Umrichter dienen. Mit dem Umrichter könnte der von dem elektrischen Generator erzeugte elektrische Wechselstrom veränderbarer Frequenz zunächst in Gleichstrom und dann in Wechselstrom einer vorgebbaren Frequenz umwandelt werden. Mit diesem Wechselstrom kann dann der elektrische Antrieb angetrieben werden, der vorzugsweise als Asynchronmotor ausgeführt ist.

In einer bevorzugten Ausführungsform könnten die am Schubrohr vorgesehenen elektrischen Komponenten einen Bremswiderstand aufweisen. Ein solcher Bremswiderstand könnte zum Abbremsen mit den Rädern des Fahrzeugachssystems genutzt werden, nämlich dann, wenn die an dem Fahrzeugachssystem angeordneten elektrischen Antriebe im Generatorbetrieb betrieben werden. Sobald die elektrischen Antriebe in Generatorbetrieb betrieben werden, erzeugen diese elektrischen Strom, welcher beispielsweise dem Bremswiderstand oder einem anderen elektrischen Verbraucher zugeführt werden könnte. Hierdurch erzeugen die elektrischen Antriebe ein Bremsmoment, was beispielsweise zu einer lang andauernden Abbremsung bei einer Bergabfahrt des Nutzfahrzeugs genutzt werden könnte. Der Bremswiderstand könnte beispielsweise in Form einer Heizspule ausgeführt sein, mit welcher gegebenenfalls über entsprechende, eine wärmetauschende Flüssigkeit enthaltende Leitungen Fahrzeugkomponenten geheizt werden, beispielsweise der Getriebeölkreislauf. Ganz allgemein kann der von dem in Generatorbeschaltung betreibbaren elektrischen Antrieb erzeugte elektrische Strom in mechanische und/oder thermodynamische Energie umgewandelt und an anderer Stelle des Nutzfahrzeugs verbraucht oder gespeichert werden.

In einer ganz besonders bevorzugten Ausführungsform weisen die am Schubrohr vorgesehenen elektrischen Komponenten eine Steuereinheit auf. Mit der Steuereinheit könnte der elektrische Antrieb, gegebenenfalls der Leistungselektronikbaustein, der Umrichter und/oder der Bremswiderstand ansteuerbar oder regelbar sein.

Insbesondere wenn das erfindungsgemäße Fahrzeugachssystem für eine Vorderachse eines Nutzfahrzeugs eingesetzt wird, könnte vorgesehen sein, dass die Fahrzeugachse eine Lenkachse aufweist. In diesem Fall wäre es zweckmäßig, die Räder der Hinterachse rein mechanisch von einem dem Nutzfahrzeug zugeordneten Verbrennungsmotor anzutreiben, und die Räder der Lenkachse rein elektrisch anzutreiben. Hierdurch können die Räder jeder Achshälfte der Lenkachse in ganz besonders vorteilhafter Weise mit einer voneinander unabhängigen Drehzahl angesteuert werden, so dass hierdurch beispielsweise eine Lenkunterstützung realisierbar ist, ohne jedoch ein mechanisch aufwändiges Getriebe zwischen den Rädern der jeweiligen Achshälfte vorzusehen.

Ganz besonders bevorzugt ist am Schubrohr mindestens eine elektrische Schnittstelle vorgesehen, mit welcher mindestens eine am Rahmen des Fahrzeugs und/oder an der Fahrzeugachse vorgesehene elektrische Leitung mit mindestens einer elektrischen Leitung verbindbar ist, welche am Schubrohr angeordnet ist. Hierdurch kann die Montage des Nutzfahrzeugs in ganz besonders vorteilhafter Weise vereinfacht werden, es muss nämlich kein Kabelbaum durch das Schubrohr gezogen bzw. im Schubrohr verlegt werden. Es sind vielmehr lediglich die Verbindungen der elektrischen Schnittstelle herzustellen, wobei eine elektrische Schnittstelle ein Steckersystem aufweisen könnte, welches vorzugsweise verschraubbar ausgebildet ist und hierdurch gegen ein unbeabsichtigtes Lösen gesichert wäre.

Zur weiteren Vereinfachung der Montage des Nutzfahrzeugs, aber auch zur einfacheren Aufrüstung bereits vorhandener Nutzfahrzeuge, könnten die am Schubrohr vorgesehenen elektrischen Komponenten in einer Tragestruktur vormontierbar sein. Hierdurch würden die elektrischen Komponenten nebst der Tragestruktur ein Modul bilden, welches an oder in das Schubrohr montierbar ist. Die Tragestruktur selbst könnte wiederum Komponenten einer Kühlung umfassen, mit welcher die elektrischen Komponenten im Schubrohr gekühlt werden können.

Bei einem elektrischen Antriebssystem für ein Nutzfahrzeug kann die Kühlung der elektrischen Komponenten ein wichtiger Aspekt der Fahrzeugkonzeption darstellen. Vor diesem Hintergrund könnte die Oberfläche und/oder die Wandung der Fahrzeugachse und/oder des Schubrohrs derart ausgebildet sein, dass hierdurch eine Kühlung der elektrischen Komponenten möglich ist. Dies könnte im Konkreten dadurch erfolgen, dass die Oberfläche und/oder die Wandung der Fahrzeugachse und/oder des Schubrohrs Kühlrippen und/oder mindestens einen Kanal aufweisen bzw. aufweist. Vorzugsweise ist der Kanal mäanderförmig verlaufend angeordnet und ist insbesondere mit einem Kühlmittel durchströmbar. Mit den am Schubrohr oder an das Fahrzeugachse angeordneten Kühlrippen kann eine Luftkühlung der elektrischen Komponenten erfolgen, mit einem von einem Kühlmittel durchströmten Kanal könnte beispielsweise eine Wasserkühlung realisiert werden.

Die eingangs genannte Aufgabe hinsichtlich eines Fahrzeugs und insbesondere eines landwirtschaftlichen oder industriellen Nutzfahrzeugs wird durch die Merkmale des Patentanspruchs 12 gelöst. Hiernach ist das erfindungsgemäße Fahrzeug durch ein Fahrzeugachssystem nach einem der Patentansprüche 1 bis 11 gekennzeichnet.

Zur Vermeidung von Wiederholungen wird auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen in einer schematischen Darstellung in
- Fig. 1: ein Ausführungsbeispiel der vorliegenden Erfindung in einer Draufsicht und
- Fig. 2: das Ausführungsbeispiel aus Fig. 1 in einer seitlichen Ansicht.

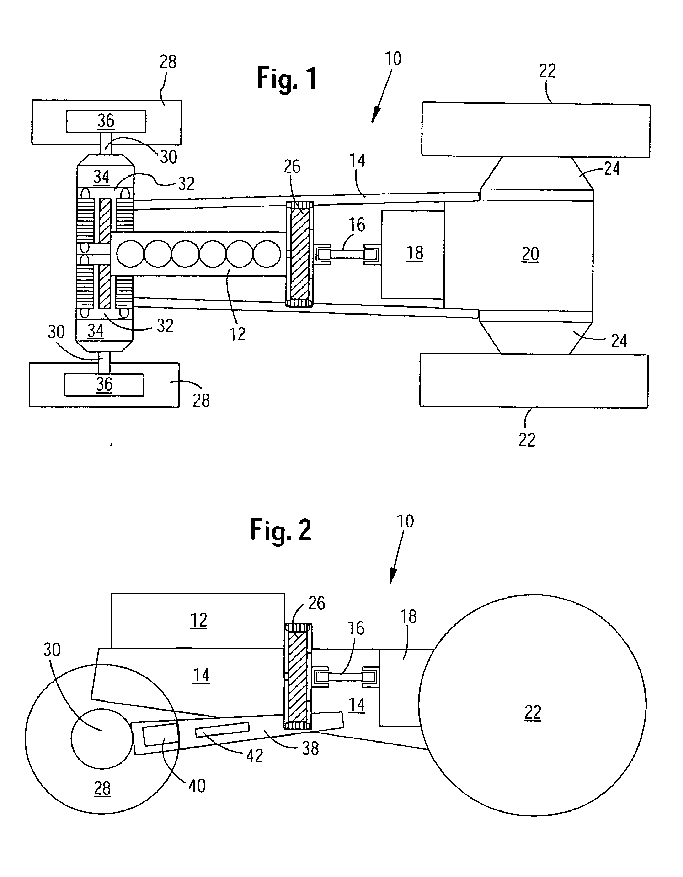

In den Fig. 1 und 2 ist jeweils ein landwirtschaftliches Nutzfahrzeug 10 gezeigt, wobei gleiche oder ähnliche Baugruppen mit denselben Bezugszeichen gekennzeichnet sind. Das landwirtschaftliche Nutzfahrzeug 10 umfasst einen Verbrennungsmotor 12, welcher am Rahmen 14 angebracht ist. Der Verbrennungsmotor 12 treibt über die Antriebswelle 16 und das automatisiert geschaltete mechanische Getriebe 18 sowie das Differentialgetriebe 20 die Hinterräder 22 an, welche der Hinterachse 24 des landwirtschaftlichen Nutzfahrzeugs 10 zugeordnet sind.

Um die Antriebswelle 16 herum ist der Kurbelwellengenerator 26 angeordnet, dessen Rotor an der Antriebswelle 16 angebracht ist. Beim Betrieb des Verbrennungsmotors 12 bzw. bei einer Drehung der Antriebswelle 16 erzeugt der Kurbelwellengenerator 26 elektrischen Wechselstrom, der eine Frequenz aufweist, die abhängig von der Drehzahl des Verbrennungsmotors 12 ist. Mit der von dem Kurbelwellengenerator 26 erzeugten elektrischen Energie werden die zwei Räder 28 der der Fahrzeugachse 30 zugeordneten Elektromotoren 32 angetrieben, die in Form von Asynchronmotoren ausgebildet sind. Die Fahrzeugachse 30 ist in Form einer gelenkten Vorderachse des landwirtschaftlichen Nutzfahrzeugs 10 ausgebildet, und zwar in Form einer Starrachse. Zwischen den Elektromotoren 32 und den Rädern 28 sind Getriebestufen 34 und 36 vorgesehen, mit welchen die Drehzahl der Elektromotoren 32 untersetzt werden.

Die Fahrzeugachse 30 ist beweglich am Rahmen 14 des landwirtschaftlichen Nutzfahrzeugs 10 angebracht, wobei die Fahrzeugachse 30 pendelnd aufgehängt ist. Zur Unterstützung der beweglichen bzw. pendelnden Aufhängung ist ein Schubrohr 38 vorgesehen, welches mit seinem einen Ende am Rahmen 14 und mit seinem anderen Ende an der Fahrzeugachse 30 angebracht ist.

Erfindungsgemäß sind am oder im Schubrohr 38 elektrische Komponenten 40, 42 für die elektrischen Antriebe 32 vorgesehen. Diese elektrischen Komponenten 40, 42 umfassen eine Leistungselektronikbaugruppe 40, welcher ein Umrichter und eine Steuereinheit zur Ansteuerung der elektrischen Antriebe 32 zugeordnet und welche in Fig. 2 als eine Baugruppe gezeigt ist. Als weitere elektrische Komponente im Schubrohr 38 ist ein Bremswiderstand 42 vorgesehen, mit welcher die von einem elektrischen Antrieb 32 im Generatorbetrieb erzeugte elektrische Energie in Wärmeenergie umgewandelt werden kann. Mit dieser erzeugt in Wärmeenergie können einzelne Komponenten des landwirtschaftlichen Nutzfahrzeugs 10 beheizt werden, wobei die hierzu vorgesehenen Heizleitungen der Einfachheit halber nicht gezeigt sind.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Fahrzeugachssystem für ein landwirtschaftliches oder industrielles Nutzfahrzeug, mit einer Fahrzeugachse (30), wobei mindestens zwei Räder (28) an der Fahrzeugachse (30) drehbar angebracht sind, mit einem Schubrohr (38), welches zur Unterstützung der Achsaufhängung einenends mit einem Rahmen (14) eines Fahrzeugs (10) und anderenends mit der Fahrzeugachse (30) verbindet ist, und mit mindestens einem an der Fahrzeugachse (30) angeordneten elektrischen Antrieb (32), mit welchem mindestens ein an der Fahrzeugachse (30) angebrachtes Rad (28) antreibbar ist, wobei am - vorzugsweise im - Schubrohr (38) elektrische Komponenten (40, 42) für den elektrischen Antrieb (32) vorgesehen sind, **dadurch gekennzeichnet, dass** elektrische Versorgungsleitungen von einem am Fahrzeug angeordneten Stromversorgungssystem (26) über das Schubrohr (38) zur Fahrzeugachse (30) geleitet sind, dass die Fahrzeugachse (30) pendelnd gelagert ist und dass die Fahrzeugachse (30) eine Lenkachse aufweist und/oder als Vorderachse ausgebildet ist.

2. Fahrzeugachssystem nach Anspruch 1, **dadurch gekennzeichnet, dass** das Schubrohr (38) einen im Wesentlichen kreis-, oval- oder vieleckförmigen Querschnitt aufweist, vorzugsweise aus mehreren Teilen zusammensetzbar ist und insbesondere modular ausgebildet ist.

3. Fahrzeugachssystem nach Anspruch 1 oder 2, **dadurch gekennzeichnet, dass** die am Schubrohr (38) vorgesehenen elektrischen Komponenten (40, 42) mindestens einen Leistungselektronikbaustein (40) aufweisen, mit welchem beispielsweise die Höhe der elektrischen Leistung steuerbar ist, welche an den elektrischen Antrieb (32) abgebbar ist.

4. Fahrzeugachssystem nach Anspruch 1 oder 2, **dadurch gekennzeichnet, dass** mindestens ein Leistungselektronikbaustein (40) an der Fahrzeugachse (30) angeordnet ist, wobei mit dem Leistungselektronikbaustein (40) beispielsweise die Höhe der elektrischen Leistung steuerbar ist, welche an den elektrischen Antrieb (32) abgebbar ist.

5. Fahrzeugachssystem nach einem der Ansprüche 1 bis 4, **dadurch gekennzeichnet, dass** die am Schubrohr (38) vorgesehenen elektrischen Komponenten (40, 42) einen Umrichter aufweisen, mit welchem vorzugsweise der von einem elektrischen Generator (26) erzeugbare elektrische Wechselstrom veränderbarer Frequenz zunächst in Gleichstrom und dann wieder in Wechselstrom einer vorgebbaren Frequenz umwandelbar ist.

6. Fahrzeugachssystem nach einem der Ansprüche 1 bis 5, **dadurch gekennzeichnet, dass** die am Schubrohr (38) vorgesehenen elektrischen Komponenten (40, 42) einen Bremswiderstand (42) aufweisen, mit welchem vorzugsweise der von dem in Generatorbeschaltung betreibbaren elektrischen Antrieb (32) erzeugte elektrische Strom in mechanische und/oder thermodynamische Energie umwandelbar ist.

7. Fahrzeugachssystem nach einem der Ansprüche 1 bis 6, **dadurch gekennzeichnet, dass** die am Schubrohr (38) vorgesehenen elektrischen Komponenten (40, 42) eine Steuereinheit aufweisen, mit welcher vorzugsweise der elektrische Antrieb (32), gegebenenfalls der Leistungselektronikbaustein (40), der Umrichter und/oder der Bremswiderstand (42) ansteuerbar oder regelbar ist.

8. Fahrzeugachssystem nach einem der Ansprüche 1 bis 7, **dadurch gekennzeichnet, dass** am Schubrohr (38) mindestens eine elektrische Schnittstelle vorgesehen ist, mit welcher mindestens eine am Rahmen des Fahrzeugs und/oder an der Fahrzeugachse (30) vorgesehene elektrische Leitung mit mindestens einer elektrischen Leitung verbindbar ist, welche am Schubrohr (38) angeordnet ist.

9. Fahrzeugachssystem nach einem der Ansprüche 1 bis 8, **dadurch gekennzeichnet, dass** die am Schubrohr (38) vorgesehenen elektrischen Komponenten (40, 42) in einer Tragestruktur vormontierbar sind, wobei zur Endmontage die Tragestruktur an oder in das Schubrohr (38) montierbar ist.

10. Fahrzeugachssystem nach einem der Ansprüche 1 bis 9, **dadurch gekennzeichnet, dass** die Oberfläche und/oder die Wandung der Fahrzeugachse (30) und/oder des Schubrohrs (38) derart ausgebildet ist bzw. sind, dass eine Kühlung der elektrischen Komponenten (40, 42) möglich ist.

11. Fahrzeugachssystem nach Anspruch 10, **dadurch gekennzeichnet, dass** die Oberfläche und/oder die Wandung der Fahrzeugachse (30) und/oder des Schubrohrs (38) Kühlrippen und/oder mindestens einen Kanal aufweisen bzw. aufweist, wobei der Kanal vorzugsweise mäanderförmig verlaufend angeordnet ist und welcher insbesondere mit einem Kühlmittel durchströmbar ist.

12. Fahrzeugs, insbesondere ein landwirtschaftliches oder industrielles Nutzfahrzeug, **gekennzeichnet durch** ein Fahrzeugachssystem nach einem der Ansprüche 1 bis 11.

## Claims

1. Vehicle axle system for an agricultural or industrial utility vehicle, having a vehicle axle (30), wherein at least two wheels (28) are rotatably mounted on the vehicle axle (30), having a torque tube (38) which, in order to support the axle suspension, is connected at one end to a frame (14) of a vehicle (10) and at the other end to the vehicle axle (30), and having at least one electric drive (32) which is arranged on the vehicle axle (30) and with which at least one wheel (28) which is mounted on the vehicle axle (30) can be driven, wherein electric components (40, 42) for the electric drive (32) are provided on, preferably in, the torque tube (38), **characterized in that** electric supply lines from a power supply system (26) arranged on the vehicle are directed to the vehicle axle (30) via the torque tube (38), **in that** the vehicle axle (30) is mounted in a suspended fashion, and **in that** the vehicle axle (30) has a steering axle and/or is embodied as a front axle.

2. Vehicle axle system according to Claim 1, **characterized in that** the torque tube (38) has a substantially circular, oval-shaped or polygonal cross section, can preferably be assembled from a plurality of parts, and is in particular of modular design.

3. Vehicle axle system according to Claim 1 or 2, **characterized in that** the electric components (40, 42) which are provided on the torque tube (38) have at least one power electronic module (40) with which, for example, the level of the electric power which can be output to the electric drive (32) can be controlled.

4. Vehicle axle system according to Claim 1 or 2, **characterized in that** at least one power electronic module (40) is arranged on the vehicle axle (30), wherein, for example, the level of the electric power which can be output to the electric drive (32) can be controlled with the power electronic module (40).

5. Vehicle axle system according to one of Claims 1 to 4, **characterized in that** the electric components (40, 42) which are provided on the torque tube (38) have a power converter with which, preferably, the electric alternating current which can be generated by an electric generator (26) and has a variable frequency can initially be converted into DC current and then back into AC current with a variable frequency.

6. Vehicle axle system according to one of Claims 1 to 5, **characterized in that** the electric components (40, 42) which are provided on the torque tube (38) have a braking resistor (42) with which, preferably, the electric current which is generated by the electric drive (32) which can be operated in a generator configuration can be converted into mechanical and/or thermodynamic energy.

7. Vehicle axle system according to one of Claims 1 to 6, **characterized in that** the electric components (40, 42) which are provided on the torque tube (38) have a control unit with which, preferably, the electric drive (32), if appropriate the power electronic module (40), the power converter and/or the braking resistor (42) can be actuated or controlled.

8. Vehicle axle system according to one of Claims 1 to 7, **characterized in that** at least one electric interface, with which at least one electric line which is provided on the frame of the vehicle and/or on the vehicle axle (30) can be connected to at least one electric line which is arranged on the torque tube (38), is provided on the torque tube (38).

9. Vehicle axle system according to one of Claims 1 to 8, **characterized in that** the electric components (40, 42) which are provided on the torque tube (38) can be premounted in a supporting structure, wherein the supporting structure can be mounted on or in the torque tube (38) for final mounting.

10. Vehicle axle system according to one of Claims 1 to 9, **characterized in that** the surface and/or the wall of the vehicle axle (30) and/or of the torque tube (38) is/are embodied in such a way that it possible to cool the electric components (40, 42).

11. Vehicle axle system according to Claim 10, **characterized in that** the surface and/or the wall of the vehicle axle (30) and/or of the torque tube (38) have/has cooling fins and/or at least one duct, wherein the duct is arranged preferably extending in a meandering shape, and, in particular, a coolant can flow through said duct.

12. Vehicle, in particular an agricultural or industrial utility vehicle, **characterized by** a vehicle axle system according to one of Claims 1 to 11.

## Revendications

1. Système d'essieu de véhicule pour un véhicule utilitaire agricole ou industriel, comprenant un essieu de véhicule (30), au moins deux roues (28) étant montées de manière à pouvoir tourner sur l'essieu de véhicule (30), comprenant un tube de poussée (38), qui est connecté à un châssis (14) d'un véhicule (10) à une extrémité et à l'essieu de véhicule (30) à l'autre extrémité, en vue de supporter la suspension d'essieu, et au moins un entraînement électrique (32) disposé sur l'essieu de véhicule (30), avec lequel au moins une roue (28) montée sur l'essieu de véhicule (30) peut être entraînée, des composants électriques (40, 42) étant prévus sur, et de préférence dans, le tube de poussée (38) pour l'entraînement électrique (32), **caractérisé en ce que** des conduites d'alimentation électriques sont guidées depuis un système d'alimentation électrique (26) disposé sur le véhicule par le biais du tube de poussée (38) jusqu'à l'essieu de véhicule (30), **en ce que** l'essieu de véhicule (30) est monté de manière pendulaire et **en ce que** l'essieu de véhicule (30) présente un essieu directeur et/ou est réalisé sous forme d'essieu avant.

2. Système d'essieu de véhicule selon la revendication 1, **caractérisé en ce que** le tube de poussée (38) présente une section transversale essentiellement circulaire, ovale ou polygonale, de préférence peut être constitué de plusieurs parties et est réalisé notamment sous forme modulaire.

3. Système d'essieu de véhicule selon la revendication 1 ou 2, **caractérisé en ce que** les composants électriques (40, 42) prévus sur le tube de poussée (38) présentent au moins un module électronique de puissance (40), avec lequel par exemple on peut commander l'amplitude de la puissance électrique qui peut être fournie au niveau de l'entraînement électrique (32).

4. Système d'essieu de véhicule selon la revendication 1 ou 2, **caractérisé en ce qu'**au moins un module électronique de puissance (40) est disposé sur l'essieu de véhicule (30), l'amplitude de la puissance électrique qui peut être fournie au niveau de l'entraînement électrique (32) pouvant par exemple être commandée avec le module électronique de puissance (40).

5. Système d'essieu de véhicule selon l'une quelconque des revendications 1 à 4, **caractérisé en ce que** les composants électriques (40, 42) prévus sur le tube de poussée (38) présentent un onduleur avec lequel de préférence le courant alternatif électrique pouvant être produit par un générateur électrique (26), de fréquence variable, peut d'abord être converti en un courant continu et ensuite à nouveau en un courant alternatif d'une fréquence prédéfinissable.

6. Système d'essieu de véhicule selon l'une quelconque des revendications 1 à 5, **caractérisé en ce que** les composants électriques (40, 42) prévus sur le tube de poussée (38) présentent une résistance de freinage (42), avec laquelle de préférence le courant électrique produit par l'entraînement électrique (32) pouvant être commandé dans le branchement du générateur peut être converti en une énergie mécanique et/ou thermodynamique.

7. Système d'essieu de véhicule selon l'une quelconque des revendications 1 à 6, **caractérisé en ce que** les composants électriques (40, 42) prévus sur le tube de poussée (38) présentent une unité de commande avec laquelle de préférence l'entraînement électrique (32), éventuellement le module électronique de puissance (40), l'onduleur et/ou la résistance de freinage (42) peuvent être commandés ou régulés.

8. Système d'essieu de véhicule selon l'une quelconque des revendications 1 à 7, **caractérisé en ce que** l'on prévoit sur le tube de poussée (38) au moins une interface électrique, avec laquelle au moins une conduite électrique prévue sur le châssis du véhicule et/ou sur l'essieu de véhicule (30) peut être connectée à au moins une conduite électrique qui est disposée sur le tube de poussée (38).

9. Système d'essieu de véhicule selon l'une quelconque des revendications 1 à 8, **caractérisé en ce que** les composants électriques (40, 42) prévus sur le tube de poussée (38) peuvent être prémontés dans une structure porteuse, la structure porteuse pouvant être montée sur ou dans le tube de poussée (38) en vue du montage final.

10. Système d'essieu de véhicule selon l'une quelconque des revendications 1 à 9, **caractérisé en ce que** la surface et/ou la paroi de l'essieu de véhicule (30) et/ou du tube de poussée (38) est ou sont réalisées de telle sorte qu'un refroidissement des composants électriques (40, 42) soit possible.

11. Système d'essieu de véhicule selon la revendication 10, **caractérisé en ce que** la surface et/ou la paroi de l'essieu de véhicule (30) et/ou du tube de poussée (38) présente ou présentent des nervures de refroidissement et/ou au moins un canal, le canal étant disposé de préférence en forme de méandres et pouvant être parcouru notamment par un réfrigérant.

12. Véhicule, notamment véhicule utilitaire agricole ou industriel, **caractérisé par** un système d'essieu de véhicule selon l'une quelconque des revendications 1 à 11.
